# EUROPEAN PATENT SPECIFICATION

(11) **EP 0 918 287 B1**
(45) Date of publication and mention of the grant of the patent: **15.01.2003**
(21) Application number: 98309117.4
(22) Date of filing: 06.11.1998
(51) Int. Cl.: G06F 11/14

(54) **ROM image processing when supply of electric power is interrupted**
ROM Abbildverarbeitung im Fall einer Stromversorgungsunterbrechung
Traitement de l'image ROM dans le cas d'une interruption d'alimentation électrique

(30) Priority: 06.11.1997 KR 9758299
(43) Date of publication of application: 26.05.1999
(73) Proprietor: SAMSUNG ELECTRONICS CO., LTD., Suwon-City, Kyungki-do (KR)
(72) Inventor: Han, Ho-Sung, Seoul (KR)
(74) Representative: Tunstall, Christopher Stephen

(56) References cited:
- EP-A- 0 576 305
- US-A- 5 694 538
- ANONYMOUS: "Simple Data Integrity Method for Spanned, Segmented Data." IBM TECHNICAL DISCLOSURE BULLETIN, vol. 34, no. 12, 1 May 1992 (1992-05-01), pages 295-296, XP000308520 New York, US
- "Adapter Microcode Protection during Download" IBM TECHNICAL DISCLOSURE BULLETIN., vol. 37, no. 10, October 1994 (1994-10), pages 181-185, XP000475624 IBM CORP. NEW YORK., US ISSN: 0018-8689
- "ERASE DETECTION AND ERROR RECOVERY FOR OPTICAL FILES" IBM TECHNICAL DISCLOSURE BULLETIN,US,IBM CORP. NEW YORK, vol. 32, no. 6A, 1 November 1989 (1989-11-01), pages 319-324, XP000043224 ISSN: 0018-8689

## Description

### BACKGROUND TO THE INVENTION

The present invention relates to a method of processing a ROM image when the supply of electric power to a computer peripheral, e.g. a laser printer, is interrupted.

Generally, a laser printer performs accurate operations and communicates with a computer. The laser printer has various functions, for example emulation modes such as KSSM, PCL, and the like. Thus, the laser printer has a separate microprocessor to perform printing according to a BIOS which is stored in a ROM. In general, the BIOS is stored in a once-programmable ROM or an erasable and programmable ROM (EPROM). The ROM in which the BIOS is stored is not damaged so long as physical impact is not sustained and the data stored in it are preserved even if the supply of electric power is interrupted.

As described above, according to the present invention, the ROM image can be freely read from the ROM and written onto a flash memory, preserving the recorded data even if the supply of electric power is interrupted. If bugs which are found in the BIOS are corrected or the BIOS is upgraded after the production and sale of the laser printer, the user can obtain the corrected BIOS or the upgraded BIOS from a manufacturer through a communications line or an Internet site so as to change the BIOS having the bug or the old version of the BIOS to the corrected BIOS or the new version of the BIOS. Accordingly, product reliability can be increased.

It has been proposed to download a ROM image to a flash memory of a laser printer. The printer is provided with a RAM and the flash memory. The laser printer has the ROM image which is downloaded from a computer through a parallel port and stores the ROM image in the RAM. When a header is searched for and found in the ROM image, an ID field is red from the header. A flash memory changing table is set for a sector to be changed according to the ID field. Then, recorded data are deleted from the sector of the flash memory and the ROM image which is stored in the RAM is copied to the sector of the flash memory. However, this method of downloading the ROM image to the flash memory of the laser printer only works when electric power is normally supplied for the laser printer.

If, while the program which is recorded in the BIOS area of the flash memory is being deleted so that the laser printer can down-load the ROM image to its flash memory, the supply of electric power to the laser printer is interrupted, the program which is recorded in the boot area may be in part deleted. Accordingly, even though electric power is restored to the laser printer, the laser printer cannot be operated because the program in the boot area cannot be performed due to its partial deletion, in spite of there being a jump code in the boot area to the BIOS.

If the supply of electric power to the laser printer is interrupted before the BIOS ROM image in the RAM is copied to the flash memory, after the program which is recorded in the BIOS area of the flash memory is deleted, even though electric power is restored to the laser printer, the laser printer cannot be operated because the data which are recorded in the BIOS area have been deleted, in spite of there being a jump code in the boot area to the BIOS.

Moreover, if the supply of electric power to the laser printer is interrupted during copying of the BIOS ROM image from the RAM to the BIOS area of the flash memory after the program which is recorded in the BIOS area of the flash memory is deleted, even though electric power is restored to the laser printer, the laser printer cannot be normally operated because the ROM image is incompletely downloaded to the BIOS area, in spite of there being a jump code in the boot area to the BIOS.

EP-576,305 discloses the processing of a ROM image when the supply of electrical power is interrupted. The process involves checking whether or not the ROM image has been normally recorded.

JP-08-272,698 describes a bank-oriented memory rewriter designed to prevent data corruption when power is interrupted during a flash memory rewrite process. When a rewrite instruction is received designating a specific rewrite bank, a rewrite processor copies data in the rewrite bank to a backup bank, writes the new data into a working memory, such as a RAM. Flag information indicating whether data is effective or not is set in all the banks of the flash memory. After an interruption, the flag information of all banks is checked to allow recovery.

### SUMMARY OF THE INVENTION

The present invention is designed to address these difficulties. It is an object of the present invention to provide a method of processing a ROM image when the supply of electric power to a laser printer is interrupted during down-loading of the ROM image, in which even if the ROM image is abnormally loaded to the flash memory due to the interruption of the supply of electric power, the ROM image may be corrected so that the laser printer can be normally operated.

Accordingly, the present invention provides a method of processing a ROM image when the supply of electric power to a computer peripheral is interrupted, comprising:
checking whether or not the ROM image is normally recorded in each of a plurality of program regions of a flash∼memory of the computer peripheral, including determining whether the ROM image is in one of the following states:
   a first, abnormal state in which the program region is partially deleted;
   a second, abnormal state in which the program region is fully deleted and not re-written;
   a third, abnormal state in which the program region is partially re-written; or
   a fourth, normal state;
setting the computer peripheral to a normal mode when it is determined that the ROM image is in the fourth, normal state in each program region;
setting the computer peripheral to a down-load mode when it is determined that the ROM image is in the first, second or third, abnormal state in one of more program regions; and
when the computer peripheral is set to the down-load mode, reloading the ROM image into at least the said one or more program regions of the flash memory.

Checking whether or not the ROM image is normally recorded in each program region may comprise detecting a check word in that program region. The check words may be recorded at the beginning and the end of the program region.

The ROM image may be re-loaded by:
down-loading the ROM image through a parallel port to a RAM;
determining whether or not a header is included in the ROM image stored in the RAM;
reading an ID of the header when the ROM image which is stored in the RAM includes such a header;
setting a table of changes for the flash memory according to the ID;
checking whether or not it is determined that the header is included in all regions of the ROM image stored in the RAM; and
copying the ROM image to the flash memory according to the states of the ROM image when the detecting of the header is complete throughout all region of the ROM image stored in the RAM.

Preferably, when the ROM image of one or more program regions is in the first abnormal state, the ROM image stored in that or those regions is deleted and the corresponding region or regions of the ROM image stored in the RAM is copied to the flash memory. Preferably, when the ROM image of one or more program regions is in the second abnormal state, the corresponding region or regions of the ROM image stored in the RAM is copied to the flash memory. Preferably, when the ROM image of one or more program regions is in the third abnormal state, the ROM image stored in that or those regions of the flash memory is deleted and the ROM image which is stored in the corresponding region or regions of the RAM is copied to the flash memory.

The table of changes for the flash memory preferably has bits corresponding to sectors of the flash memory, which are respectively set to one when the corresponding sector of the flash memory is changed and to zero when it is unchanged.

The header may include a two byte header field which indicates that the ROM image is an image to be changed and a one byte of an ID field which indicates the kind of the ROM image to be changed.

Preferably, the method is performed by execution of a program stored in the boot area of the flash memory. The boot area of the flash memory may be provided with:
a routine for detecting whether or not the ROM image is normally recorded in the program regions;
a transmitting driver for storing the ROM image in the RAM after receiving the ROM image which is transmitted through the parallel port;
a RAM driver for setting the table of changes for the flash memory by reading the ID after it is determined whether or not the header is presented in the RAM; and
a flash memory driver for copying the ROM image in the RAM to the corresponding sector of the flash memory after the ROM image is deleted from the corresponding sector of the flash memory according to the table of the changes for the flash memory.

### BRIEF DESCRIPTION OF THE DRAWINGS

The present invention will now be described by way of example with reference to the accompanying drawings, in which:
FIG. 1 is a schematic block diagram showing an apparatus for loading a ROM image into a laser printer;
FIG. 2 shows the structure of a conventional ROM map in the laser printer;
FIG. 3 shows the boot area of the ROM map;
FIG. 4 shows the boot area of a ROM map in a laser printer to which the present invention is applied;
FIG. 5 shows a region starting check word and a region ending check word;
FIG. 6 shows a header of a flash memory;
FIG. 7 shows a table of changes for the flash memory;
FIG. 8 is a flow chart showing processing of the ROM image according to the present invention; and
FIG. 9 is a flow chart showing loading of the ROM image to the flash memory according to the present invention.

### DETAILED DESCRIPTION OF THE PREFERRED EMBODIMENT

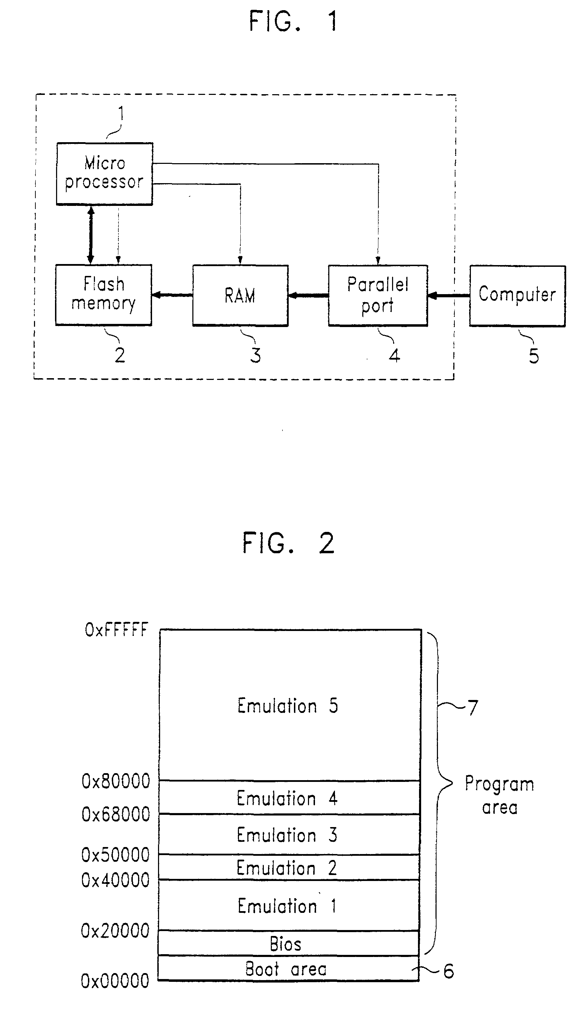

FIG. 1 is a block diagram schematically showing an apparatus for loading the ROM image into the laser printer which has a flash memory. As shown in FIG. 1, the apparatus for loading the ROM image into the laser printer includes a microprocessor 1 for controlling the system generally according to instructions in a program which is stored in the flash memory, the flash memory 2 having the ROM image, such as BIOS and emulation software stored in it to operate the microprocessor 1, a parallel port 4 through which the ROM image is loaded from a computer to the flash memory of the laser printer under the control of the microprocessor 1, and a RAM 3 in which the ROM image is temporarily stored.

As shown in FIG. 2, the typical ROM in the laser printer has address areas which are arranged from a lower portion to an upper portion in FIG. 2 and includes a boot area 6 which is firstly performed when electric power is supplied to the laser printer and a program area 7 having a BIOS to control the overall operation of the laser printer and an emulation mode program for each emulation mode of the laser printer.

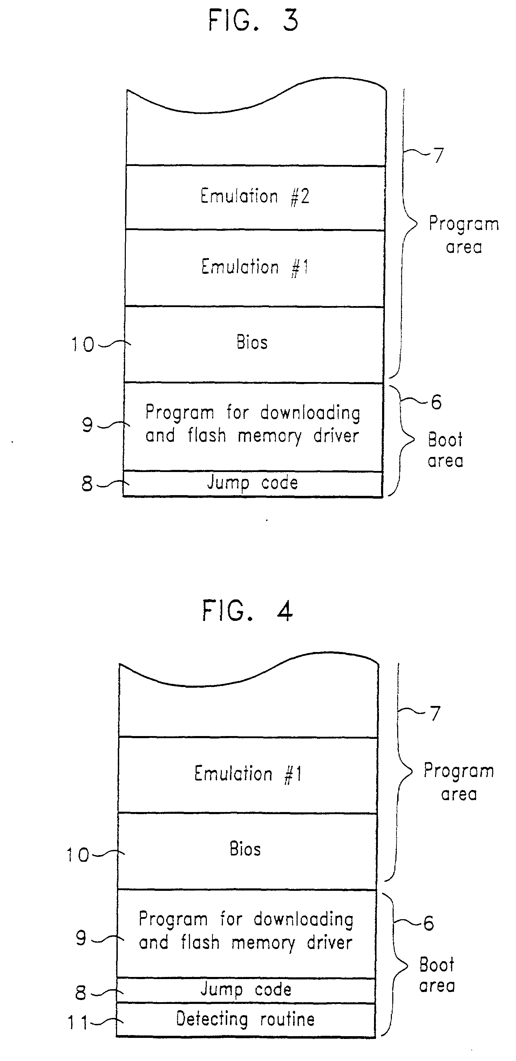

As shown in FIG. 3, the ROM includes a boot area 6 which has a jump code 8 and a down load program 9 for loading the ROM image to the flash memory, and a program area 7 which has a BIOS 10 for controlling an overall operation of the laser printer and an emulation mode program for each emulation mode for the laser printer. As shown in FIG. 4, the ROM of the present invention includes the same areas as that of the ROM in FIG. 3, except that its boot area has a detecting routine 11.

With reference to FIG. 3, when electric power is supplied to the laser printer, the microprocessor 1 reads a jump code 8 in the boot area 6 so as to determine whether the laser printer is presented either in a normal mode or in a down-loading mode. If the laser printer is in the normal mode, the microprocessor 1 reads the BIOS in the program region, while if the laser printer is in the down-loading mode, the microprocessor 1 reads a down-loading program in the boot area 6. On the other hand, a user may set a desired mode by pushing a specified button on the laser printer.

With reference to FIG. 4, according to the present invention, the detecting routine 11 is added to the flash memory before the sector of the jump code 8. The microprocessor 1 determines whether the ROM BIOS and the emulation programs are normally recorded on each program area 7 in the flash memory 2 so as to set the operation mode of the laser printer.

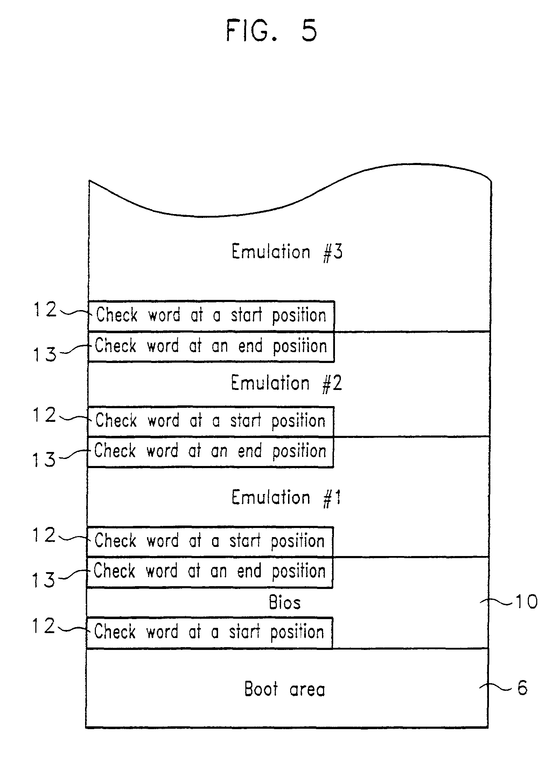

FIG. 5 shows a region starting check word and a region ending check word which are applied to the ROM image according to the present invention. As shown in FIG. 5, the check words 12 and 13 are each two bytes at the start and end of each program area 7 in which the ROM image is down-loaded. The check words 12 and 13 include an area starting check word 12 indicating the start of each program area 7 and an area ending check word 13 indicating the end of each program area 7. Each of the check words 12 and 13 has a specified value. Each of the check words 12 and 13 described will be limited to 55AA hexadecimal to help with understanding the present invention. Moreover, if the check words 12 and 13 are deleted from the flash memory 2, they have a value of FFFF hexadecimal.

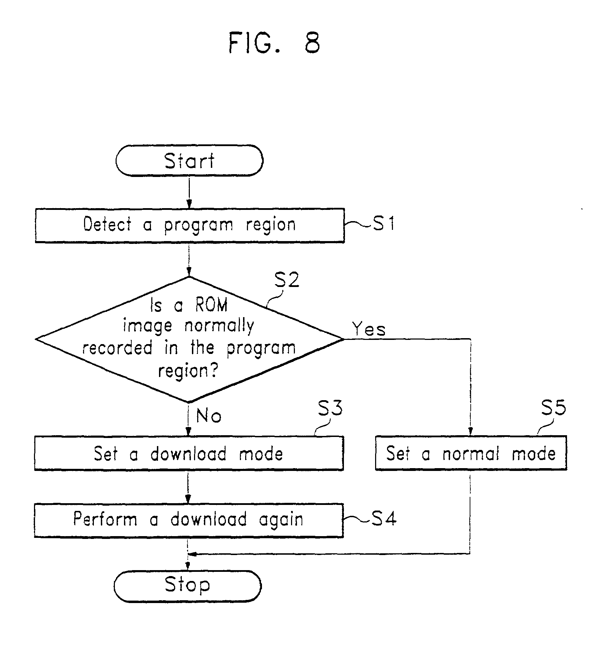

As shown in FIG. 8, when electric power is supplied to the laser printer, the detecting routine 11 in the boot area 6 is performed. The detecting routine 11 detects the check words 12 and 13 throughout the program area 7 including the BIOS and the emulation programs in the flash memory 2 in step S1. Then, the detecting routine 11 checks whether the BIOS and the emulation programs are correctly recorded on the program area 7 in step S2.

When it is determined that the ROM image is normally recorded on all the areas of the flash memory 2, the laser printer is set into the normal mode in step S5 and the microprocessor 1 reads the BIOS 10. On the other hand, when it is determined that the ROM image is abnormally recorded in the flash memory 2, the laser printer is set to a down-loading mode in step S3, and down-loading of the ROM image is performed again in step 4.

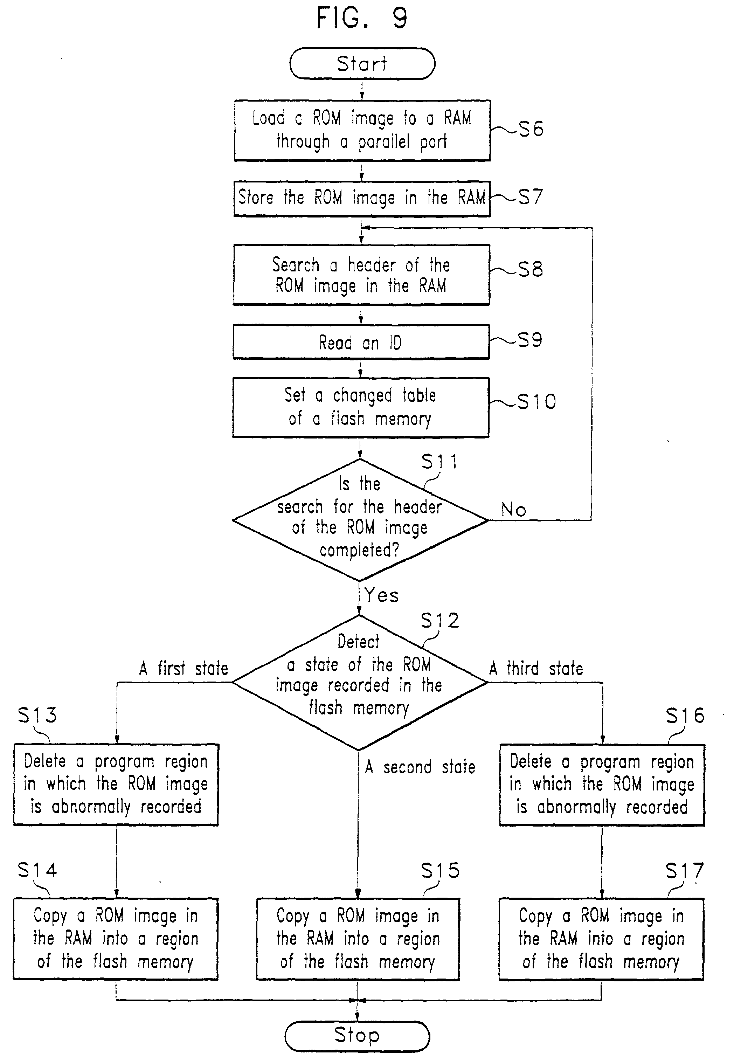

FIG. 9 is a flow chart showing steps of loading the ROM image to the flash memory according to the present invention. As shown in FIG. 2, the microprocessor 1 receives the ROM image from the computer 5 through the parallel port 4 by using the down loading program in the boot area 6 in step S6. The ROM image is stored in the RAM 3 by the flash memory driver in step S7.

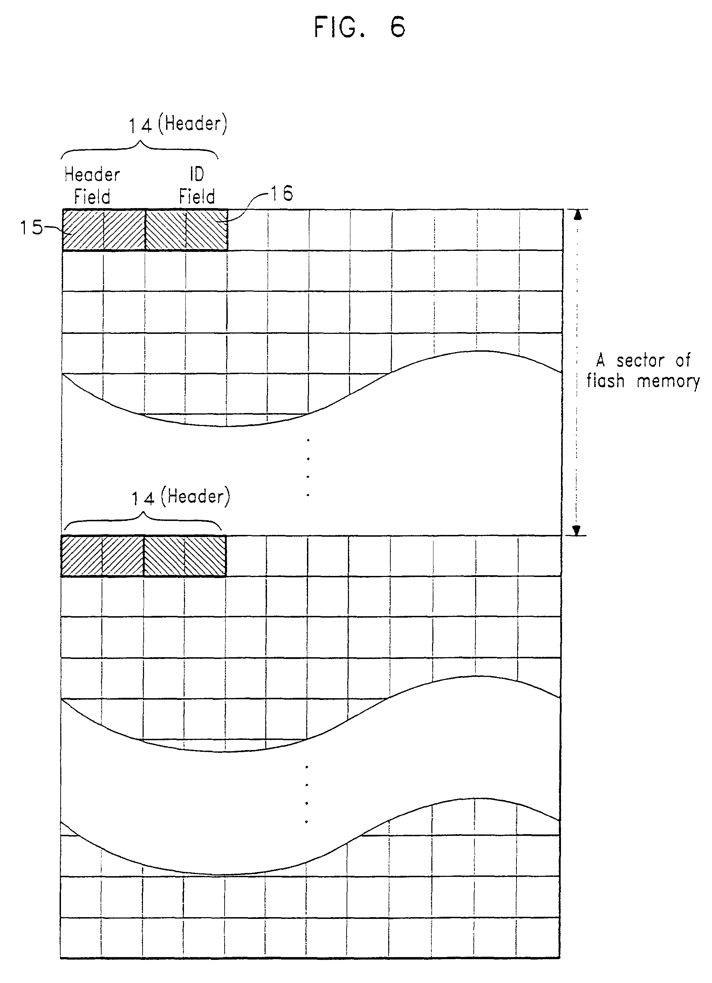

As shown in FIG. 6, the ROM image which is down-loaded into the RAM 3 has a header 14 to the extent of one sector of the flash memory 2. The header 14 includes a header field 15 which has two byte in size and indicates the image to be changed and an ID field 16 which is two bytes in size and indicates the type of the ROM image.

In step S8, it is checked whether a header 14 is detected which has a size corresponding to the one sector of the flash memory 2 after the ROM image is down-loaded into the RAM 3. In step S9, when the header 9 is detected in step S8, the ID field 16 which is positioned after the header field 15 is read in step S9.

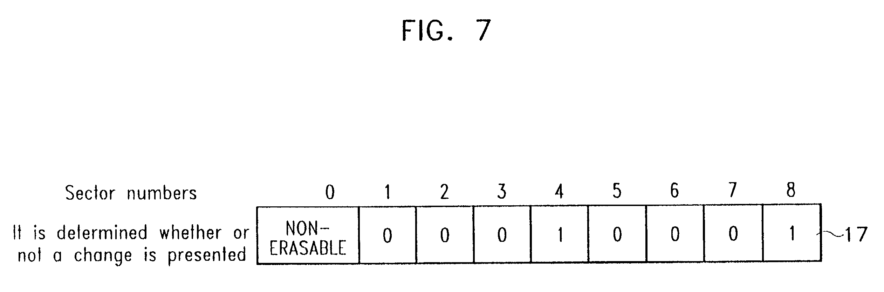

The ID field 16 indicates whether the ROM image is either the BIOS image or any one image of the plurality of the emulation images. According to the ID field 16, the down load program in the boot area 6 sets a bit of the sector to be changed into one bit in the flash memory changing table 17 as shown in FIG. 7, in step S10. Then, in step S11, the down load program checks whether it has completed the detection of the header 14 in all regions of the RAM 3. If the detecting of the header 15 is incomplete, steps S8 to S11 are again performed. If the detecting of the header 14 in all regions of the RAM 3 is complete, the image which is down-loaded in the RAM is copied down to the flash memory 2 according to the flash memory changing table 17.

The region of the program which has errors may have one of three states in step S1. The copying operation according to the three states of the program region is as follows. The first state is when the region ending check word 13 is 55AA and the region starting check word 12 is FFFF in the program region 7 which is detected, indicating that the supply of electric power was interrupted in the deletion step during the down-loading of the ROM image to the program region. The ROM image of the RAM 3 is copied to the program region after deleting the data in the program region, in step 14.

The second state is when the region starting check word 12 and the region ending check word 13 are FFFF, indicating that the supply of electric power was interrupted before the step of copying the ROM image in the RAM to the flash memory and after step of deleting the recorded data during the down-loading of the ROM image in the RAM to the flash memory. It is unnecessary to delete the program region. Accordingly, the ROM image in the RAM 3 is copied to the program region in step S15.

The third state is when the region starting check word 12 is 55AA, but the region ending check word 13 is FFFF, indicating that the supply of electric power was interrupted during the step of copying the ROM image to the flash memory but after deleting the recorded data in the program region during the down-loading of the ROM image to the program region. Therefore, the ROM image in the RAM 3 is copied to the program region in step S17 after the recorded data is again deleted in step S16.

Even though the ROM image may be abnormally down-loaded to the flash memory 2 because the supply of electric power to the laser printer was interrupted during the down-loading of the ROM image to the flash memory 2, the ROM image can be recorded in the flash memory 2 according to the present invention.

In this method of processing the ROM image when the supply of electric power is interrupted, since the detecting routine is added to the boot area of the flash memory to detect whether the ROM image is normally recorded in the flash memory 2, the ROM image is reloaded to the flash memory 2 according to the determination of the detecting routine. Accordingly, malfunctions of the laser printer can be prevented.

Furthermore, since the method of processing the ROM image is provided even though the supply of electric power is interrupted during the down-loading of the ROM image to the flash memory of the laser printer, product reliability can be improved and the cost of after-sales service can be reduced.

While the present invention has been particularly shown and described with reference to a laser printer, it is equally applicable to a range of computer peripherals.

## Claims

1. A method of processing a ROM image when the supply of electric power to a computer peripheral is interrupted, comprising:
checking whether or not the ROM image is normally recorded in each of a plurality of program regions of a flash memory (2) of the computer peripheral, including determining whether the ROM image is in one of the following states:
a first, abnormal state in which the program region is partially deleted;
a second, abnormal state in which the program region is fully deleted and not re-written;
a third, abnormal state in which the program region is partially re-written; or
a fourth, normal state;
setting the computer peripheral to a normal mode when it is determined that the ROM image is in the fourth, normal state in each program region;
setting the computer peripheral to a down-load mode when it is determined that the ROM image is in the first, second or third, abnormal state in one of more program regions; and
when the computer peripheral is set to the down-load mode, reloading the ROM image into at least the said one or more program regions of the flash memory (2).

2. A method according to claim 1 in which checking whether or not the ROM image is normally recorded in each program region comprises detecting a check word (12; 13) in that program region.

3. A method according to claim 2 in which the check words (12, 13) are recorded at the beginning and the end of the program region.

4. A method according to any preceding claim in which the ROM image is re-loading by:
down-loading the ROM image through a parallel port (4) to a RAM (3);
determining whether or not a header (14) is included in the ROM image stored in the RAM (3);
reading an ID of the header when the ROM image which is stored in the RAM (3) includes such a header (14);
setting a table of changes (17) for the flash memory according to the ID;
checking whether or not it is determined that the header (14) is included in all regions of the ROM image stored in the RAM (3); and
copying the ROM image to the flash memory (2) according to the states of the ROM image when the detecting of the header (14) is complete throughout all region of the ROM image stored in the RAM (3).

5. A method as claimed in claim 4 in which when the ROM image of one or more program regions is in the first abnormal state, the ROM image stored in that or those regions is deleted and the corresponding region or regions of the ROM image stored in the RAM (3) is copied to the flash memory (2).

6. A method as claimed in claim 4 or claim 5 in which when the ROM image of one or more program regions is in the second abnormal state, the corresponding region or regions of the ROM image stored in the RAM (3) is copied to the flash memory (2).

7. A method as claimed in any one of claims 4-6 in which when the ROM image of one or more program regions is in the third abnormal state, the ROM image stored in that or those regions of the flash memory (2) is deleted and the ROM image which is stored in the corresponding region or regions of the RAM (3) is copied to the flash memory (2).

8. A method as claimed in any one of claims 4-7 in which the table of changes (17) for the flash memory (2) has bits corresponding to sectors of the flash memory (2), which are respectively set to one when the corresponding sector of the flash memory (2) is changed and to zero when it is unchanged.

9. A method as claimed in any one of claims 4-8 in which the header (14) includes a two byte header field which indicates that the ROM image is an image to be changed and a one byte of an ID field which indicates the kind of the ROM image to be changed.

10. A method as claimed in any preceding claim which is performed by execution of a program stored in the boot area (6) of the flash memory (2).

11. A method as claimed in claim 4 which is performed by execution of a program stored in the boot area (6) of the flash memory (2), the boot area being provided with:
a routine (11) for detecting whether or not the ROM image is normally recorded in the program regions;
a transmitting driver for storing the ROM image in the RAM (3) after receiving the ROM image which is transmitted through the parallel port (4);
a RAM driver for setting the table of changes (17) for the flash memory (2) by reading the ID after it is determined whether or not the header (14) is presented in the RAM (3); and
a flash memory driver (9) for copying the ROM image in the RAM (3) to the corresponding sector of the flash memory (2) after the ROM image is deleted from the corresponding sector of the flash memory (2) according to the table of the changes (17) for the flash memory (2).

## Patentansprüche

1. Verfahren zur Verarbeitung eines ROM-Bildes, wenn die elektrische Stromversorgung zu einem Computer-Peripheriegerät unterbrochen ist, umfassend:
Überprüfung, ob das ROM-Bild normal in jedem von einer Mehrzahl von Programmabschnitten eines Flash-Speichers (2) des Computer-Peripheriegeräts aufgezeichnet ist oder nicht, einschließlich Ermitteln, ob das ROM-Bild einen der folgenden Zustände aufweist:
einen ersten, unnormalen Zustand, in dem der Programmabschnitt teilweise gelöscht ist;
einen zweiten, unnormalen Zustand, in dem der Programmabschnitt vollständig gelöscht und nicht überschrieben ist;
einen dritten, unnormalen Zustand, in dem der Programmabschnitt teilweise überschrieben ist; oder
einen vierten, normalen Zustand;
Versetzen des Computer-Peripheriegerätes in einen normalen Modus, wenn ermittelt wird, daß das ROM-Bild den vierten, normalen Zustand in jedem Programmabschnitt aufweist;
Versetzen des Computer-Peripheriegerätes in einen Herunterlade-Modus, wenn ermittelt wird, daß das ROM-Bild den ersten, zweiten oder dritten, unnormalen Zustand in einem oder mehreren Programmabschnitten aufweist; und
erneutes Laden des ROM-Bildes zumindest in den einen oder die mehreren genannten Programmabschnitte des Flash-Speichers (2), wenn das Computer-Peripheriegerät in den Herunterlade-Modus versetzt ist.

2. Verfahren nach Anspruch 1, bei dem das Überprüfen, ob das ROM-Bild normal in jedem Programmabschnitt aufgezeichnet ist, das Ermitteln eines Prüfwortes (12;13) in diesem Programmabschnitt umfaßt.

3. Verfahren nach Anspruch 2, bei dem die Prüfwörter (12,13) am Anfang und am Ende des Programmabschnittes aufgezeichnet sind.

4. Verfahren nach einem beliebigen vorangehenden Anspruch, bei dem das ROM-Bild erneut geladen wird durch:
Herunterladen des ROM-Bildes durch eine parallele Schnittstelle (4) in einen RAM (3);
Ermitteln, ob ein Kopfdatensatz (Header) (14) in dem in dem RAM (3) gespeicherten ROM-Bild enthalten ist oder nicht;
Lesen einer Identifikation des Kopfdatensatzes, wenn das in dem RAM (3) gespeicherte ROM-Bild einen derartigen Kopfdatensatz (14) enthält;
Erstellen einer Tabelle der Änderungen (17) für den Flash-Speicher entsprechend der Identifikation;
Überprüfung, ob ermittelt wird, daß der Kopfdatensatz (14) in allen Abschnitten des in dem RAM (3) gespeicherten ROM-Bildes enthalten ist und
Kopieren des ROM-Bildes in den Flash-Speicher (2) gemäß den Zuständen des ROM-Bildes, wenn das Ermitteln des Kopfdatensatzes (14) in allen Bereichen des in dem RAM (3) gespeicherten ROM-Bildes abgeschlossen ist.

5. Verfahren nach Anspruch 4, bei dem, wenn das ROM-Bild eines Programmabschnitts oder mehrerer Programmabschnitte den ersten unnormalen Zustand aufweist, das in diesem oder diesen Abschnitten gespeicherte ROM-Bild gelöscht und der entsprechende Abschnitt oder die entsprechenden Abschnitte des in dem RAM (3) gespeicherten ROM-Bildes in den Flash-Speicher (2) kopiert werden.

6. Verfahren nach Anspruch 4 oder 5, bei dem, wenn das ROM-Bild eines Programmabschnitts oder mehrerer Programmabschnitte den zweiten unnormalen Zustand aufweist, der entsprechende Abschnitt oder die entsprechenden Abschnitte des in dem RAM (3) gespeicherten ROM-Bildes in den Flash-Speicher (2) kopiert werden.

7. Verfahren nach einem der Ansprüche 4-6, bei dem, wenn das ROM-Bild eines oder mehrerer Programmabschnitte den dritten unnormalen Zustand aufweist, das in demjenigen Abschnitt oder denjenigen Abschnitten des Flash-Speichers (2) gespeicherte ROM-Bild gelöscht wird und das ROM-Bild, welches in dem entsprechenden Abschnitt oder den entsprechenden Abschnitten des RAM (3) gespeichert ist, in den Flash-Speicher (2) kopiert wird.

8. Verfahren nach einem der Ansprüche 4-7, bei dem die Tabelle der Änderungen (17) für den Flash-Speicher (2) Bits aufweist, die den Sektoren des Flash-Speichers (2) zugeordnet sind und jeweils auf Eins gesetzt werden, wenn der zugeordnete Sektor des Flash-Speichers (2) geändert wird, und auf Null, wenn er unverändert bleibt.

9. Verfahren nach einem der Ansprüche 4-8, bei dem der Kopfdatensatz (14) einen zwei-Byte-Kopfabschnitt enthält, der anzeigt, daß das ROM-Bild ein zu änderndes Bild ist, und ein Byte eines Identifikationsfeldes, welches die Art des zu ändernden ROM-Bildes anzeigt.

10. Verfahren nach einem der vorangehenden Ansprüche, welches durch Ausführung eines im Boot-Bereich (6) des Flash-Speichers (2) gespeicherten Programms durchgeführt wird.

11. Verfahren nach Anspruch 4, welches durch Ausführung eines in dem Boot-Bereich (6) des Flash-Speichers (2) gespeicherten Programms durchgeführt wird, wobei der Boot-Bereich versehen ist mit:
einem Unterprogramm (11) zur Ermittlung, ob das ROM-Bild normal in den Programmabschnitten aufgezeichnet ist oder nicht;
einem Übertragungs-Treiber zur Speicherung des ROM-Bildes in dem RAM (3) nach Empfang des ROM-Bildes, welches über die parallele Schnittstelle (4) übertragen wird;
einem RAM-Treiber zum Erstellen der Tabelle der Änderungen (17) für den Flash-Speicher (2) durch Lesen der Identifikation, nachdem ermittelt wurde, ob der Kopfdatensatz (14) in dem RAM (3) vorhanden ist oder nicht, und
einem Flash-Speicher-Treiber (9) zum Kopieren des ROM-Bildes in dem RAM (3) auf den entsprechenden Sektor des Flash-Speichers (2), nachdem das ROM-Bild von dem entsprechenden Sektor des Flash-Speichers (2) entsprechend der Tabelle der Änderungen (17) für den Flash-Speicher (2) gelöscht wurde.

## Revendications

1. Procédé de traitement d'une image ROM lorsque l'alimentation en courant électrique d'un périphérique informatique est interrompue, comprenant les étapes consistant à :
vérifier si l'image ROM est normalement enregistrée ou pas dans chacune d'une pluralité de régions de programme d'une mémoire flash (2) du périphérique informatique, y compris déterminer si l'image ROM est dans l'un des états suivants :
un premier état anormal dans lequel la région de programme est partiellement effacée ;
un deuxième état anormal dans lequel la région de programme est entièrement effacée et non réécrite ;
un troisième état anormal dans lequel la région de programme est partiellement réécrite ; ou
un quatrième état normal ;
régler le périphérique informatique sur un mode normal quand il est déterminé que l'image ROM se trouve dans le quatrième état normal dans chaque région de programme ;
régler le périphérique informatique sur un mode téléchargement lorsqu'il est déterminé que l'image ROM se trouve dans le premier, deuxième ou troisième état anormal dans une région de programme ou plus ; et
lorsque le périphérique informatique est réglé sur le mode téléchargement, recharger l'image ROM sur au moins ladite une région de programme ou plus de la mémoire flash (2).

2. Procédé selon la revendication 1, dans lequel vérifier si l'image ROM est normalement enregistrée ou pas dans chaque région de programme inclut détecter un mot de contrôle (12 ; 13) dans cette région de programme.

3. Procédé selon la revendication 2, dans lequel les mots de contrôle (12, 13) sont enregistrés au début et à la fin de la région de programme.

4. Procédé selon toute revendication précédente, dans lequel l'image ROM est rechargée en :
téléchargeant l'image ROM sur une RAM (3) via un port parallèle (4) ;
déterminant si un en-tête (14) est inclus ou pas dans l'image ROM enregistrée dans la RAM (13) ;
lisant une identification de l'en-tête lorsque l'image ROM qui est enregistrée dans la RAM (3) comprend un tel en-tête (14) ;
définissant un tableau des modifications (17) pour la mémoire flash selon l'identification ;
vérifiant s'il est déterminé ou pas que l'en-tête (14) est inclus dans toutes les régions de l'image ROM enregistrée dans la RAM(13); et
copiant l'image ROM sur la mémoire flash (2) selon les états de l'image ROM quand la détection de l'en-tête (14) est achevée à travers toutes les régions de l'image ROM enregistrée dans la RAM (3).

5. Procédé selon la revendication 4 dans lequel, lorsque l'image ROM d'une région de programme ou plus se trouve dans le premier état anormal, l'image ROM enregistrée dans cette ou ces région(s) est effacée et la région ou les régions correspondante(s) de l'image ROM enregistrée dans la RAM (3) est (sont) copiée(s) sur la mémoire flash (2).

6. Procédé selon la revendication 4 ou la revendication 5 dans lequel, lorsque l'image ROM d'une région de programme ou plus se trouve dans le deuxième état anormal, la région ou les régions correspondante(s) de l'image ROM enregistrée dans la RAM (3) est (sont) copiée(s) sur la mémoire flash (2).

7. Procédé selon n'importe laquelle des revendications 4 à 6 dans lequel, lorsque l'image ROM d'une région de programme ou plus se trouve dans le troisième état anormal, l'image ROM enregistrée dans cette ou ces région(s) de la mémoire flash (2) est effacée et l'image ROM qui est enregistrée dans la région ou les régions correspondante(s) de la RAM (3) est (sont) copiée(s) sur la mémoire flash (2).

8. Procédé selon n'importe laquelle des revendications 4 à 7, dans lequel le tableau des modifications (17) pour la mémoire flash (2) présente des bits correspondant à des secteurs de la mémoire flash (2), qui sont respectivement réglés sur un lorsque le secteur correspondant de la mémoire flash (2) est modifié et sur zéro, lorsqu'il n'est pas modifié.

9. Procédé selon l'une quelconque des revendications 4 à 8, dans lequel l'en-tête (14) inclut un champ d'en-tête de deux octets qui indique que l'image ROM est une image à modifier et octet à un d'un champ d'identification qui indique le type d'image ROM à modifier.

10. Procédé selon l'une quelconque des revendications précédentes, qui est effectué en exécutant un programme enregistré dans la zone d'amorce (6) de la mémoire flash (2).

11. Procédé selon la revendication 4, qui est effectué en exécutant un programme enregistré dans la zone d'amorce (6) de la mémoire flash (2), la zone d'amorce étant pourvue de :
une routine (11) pour détecter si l'image ROM est normalement enregistrée ou pas dans les régions de programme ;
un gestionnaire de transmission pour enregistrer l'image ROM dans la RAM (3) après avoir reçu l'image ROM qui est transmise via le port parallèle (4) ;
un gestionnaire de RAM pour définir le tableau des modifications (17) pour la mémoire flash (2) en lisant l'identification après avoir déterminé si l'en-tête (14) est présenté ou pas dans la RAM (3) ; et
un gestionnaire de mémoire flash (9) pour copier l'image ROM de la RAM (3) sur le secteur correspondant de la mémoire flash (2) après que l'image ROM est effacée du secteur correspondant de la mémoire flash (2) suivant le tableau des modifications (17) pour la mémoire flash (2).
